# EUROPÄISCHE PATENTSCHRIFT

(11) **EP 3 833 521 B1**
(45) Veröffentlichungstag und Bekanntmachung des Hinweises auf die Patenterteilung: **23.08.2023**
(21) Anmeldenummer: 19749295.2
(22) Anmeldetag: 30.07.2019
(51) Int. Cl.: B29C 49/06, B29B 11/14, B29L 31/00, B29B 11/08, B29C 49/10, B29C 45/00

(54) **PREFORM MIT STÜTZRING**
PREFORM WITH FLANGE
PRÉFORME AVEC BRIDE

(30) Priorität: 10.08.2018 CH 9772018; 14.05.2019 CH 6302019
(43) Veröffentlichungstag der Anmeldung: 16.06.2021
(73) Patentinhaber: ALPLA Werke Alwin Lehner GmbH & Co. KG, 6971 Hard (AT)
(72) Erfinder: DEMIR, Adem, 6923 Lauterach (AT)
(74) Vertreter: Swisspat Riederer Hasler Patentanwälte AG
(86) Internationale Anmeldenummer: PCT/EP2019/070500
(87) Internationale Veröffentlichungsnummer: WO 2020/030474

(56) Entgegenhaltungen:
- EP-A1- 1 880 824
- EP-A2- 2 439 033
- WO-A2-00/12397
- DE-A1-102009 007 906
- DE-A1-102016 102 040
- GB-A- 2 068 886
- US-A- 4 715 504
- US-A1- 2004 146 673
- US-A1- 2006 073 288

## Beschreibung

### Gebiet der Erfindung

Die Erfindung betrifft einen insbesondere spritzgegossenen Preform gemäss Oberbegriff des Anspruchs 1, einen Stützring gemäss Oberbegriff des Anspruchs 7, und ein Verfahren zur Herstellung von Kunststoffbehältern, insbesondere Kunststoffflaschen, gemäss Oberbegriff des Anspruchs 9.

### Stand der Technik

Zur Herstellung von Kunststoffflaschen ist das Streckblasverfahren bekannt. Bei diesem Verfahren wird ein sogenannter Preform mit einem länglichen Preformkörper zunächst spritzgegossen. Der Preform weist an einem ersten Längsende einen Boden auf und weist an seinem zweiten dem ersten Längsende gegenüberliegenden Längsende einen Halsabschnitt auf. An dem Halsabschnitt ist der Flaschenverschluss und zumeist ein Stützring ausgeformt, welcher zusammen mit dem Preform spritzgegossen wird. Der Preform wird in ein Formwerkzeug eingebracht und in dem Formwerkzeug zuerst durch einen Streckdorn in der Länge verstreckt und dann mit Druckluft aufgeblasen, wodurch er radial verstreckt wird. Dadurch nimmt der Preform die durch das Formwerkzeug vorgegebene Flaschenform an. Nach dem Reck-/ Blasvorgang wird die fertige Kunststoffflasche aus dem Formwerkzeug entformt.

Im sogenannten Einstufen-Streckblasverfahren wird der Preform ohne Abkühlung und Zwischenlagerung sofort nachdem er spritzgegossen wurde zu einer Kunststofflasche geformt.

Im Zweistufen-Streckblasverfahren wird in einem ersten Verfahrensschritt der Preform in der Regel spritzgegossen, abgekühlt und zwischengelagert. Alternativ können Preforms auch in Extrusionsblasverfahren oder als Kunststoffpressverfahren hergestellt werden. Auch hier werden die Preforms nach deren Herstellung abgekühlt und gelagert. Der Preform wird in einem zweiten späteren Verfahrensschritt wieder erwärmt und in einem Formwerkzeug wie oben beschrieben streckgeblasen. Beispielsweise werden mit Infrarotstrahlung Bereiche des Preforms mehr oder weniger erwärmt, um ein Temperaturprofil in den Preform einzubringen, welches für das Streckblasen des Preforms erforderlich ist.

Um den Preform zwischen den einzelnen Fertigungsstationen transportieren zu können, ist unterhalb des Flaschenverschlusses der Stützring an dem Preform ausgebildet, welcher sich in Umfangsrichtung erstreckt. Der Stützring wirkt als Haltelement, an welchem Transportvorrichtungen und Haltevorrichtungen der Fertigungslinie angreifen können. Damit die Transport- bzw. die Haltevorrichtungen an dem Stützring angreifen können, ist der Querschnittsdurchmesser des Preforms in radialer Richtung grundsätzlich kleiner ausgeführt als der Durchmesser des Stützrings.

Dadurch ist der Querschnittsdurchmesser des Preforms limitiert und den Dimensionen und den damit verbundenen Ausgestaltungsmöglichkeiten des Preforms und der daraus hergestellten Flasche sind Grenzen gesetzt. Beispielsweise lässt sich eine für die zu erzeugende Kunststoffflasche benötigte Materialmenge dadurch in den Preform einbringen, dass seine Länge vergrössert wird.

Der Stützring, welcher an der hergestellten Kunststoffflasche in der Regel keine Funktion mehr erfüllt, bedeutet einen erhöhten Materialeinsatz, denn der Stützring macht zumeist 20% des Gewichtes des Preformhalses aus. Das Gewicht des Preformhalses umfasst seinerseits 10% des für die Herstellung einer Kunststofflasche benötigten Materials. Bei der Herstellung von Massenartikeln, beispielsweise Kunststofflaschen aus Polyethylenterephtalat (PET), stellt der Materialeinsatz einen wesentlichen Faktor für ökologische und die ökonomische Wettbewerbsfähigkeit dar. Durch die sehr hohen Stückzahlen von produzierten Kunststoffflaschen haben selbst geringe Reduktionen des Materialgewichts pro Flasche das Potential zu Materialeinsparungen im Tonnenbereich zu führen.

In der GB 2 068 886 A ist ein Preform mit einem separat hergestellten Greifring beschrieben, welcher auf den Preform aufsteckbar ist. Der separate Greifring kann einen ausreichend grossen Aussendurchmesser aufweisen, damit die aus dem Preform hergestellte Flasche vereinfacht zu greifen ist. Der Greifring liegt an einem vorstehenden Ring oder vorstehenden Nocken an, welche an dem Preformhals ausgebildet sind.

Die US 2006/0073288 A1 offenbart einen Preform bzw. einen daraus hergestellten Behälter an dessen Hals ein Handgriff befestigt werden kann. Der Handgriff ist mit einem Ring verbunden, welcher an einem Auflageflansch bzw. Supportflansch des Preforms aufliegen kann.

Aus der DE 10 2009 007 906 A1 ist ein Vorformling bekannt, welcher an seinem Hals unterhalb eines Aussengewindes einen Fixierring aufweist. An dem Fixierring kann eine Halteeinrichtung einer Vorrichtung zur Handhabung des Vorformlings aufliegen. Die Haltevorrichtung kann der Montage bzw. der Arretierung einer Verschlusskappe an dem Fixierring dienen.

Sowohl in der US 4,715,504 als auch in der EP 1 880 824 A1 und der US 2004/ 0146673 A1 ist ein zweiteiliger Preform offenbart, welcher einen Hohlkörper und ein Halsteil umfasst. An dem Halsteil kann ein Aussengewinde und ein Supportring ausgeformt sein. Die beiden Teile können durch die Zweiteiligkeit aus unterschiedlichen Kunststoffen gefertigt sein und werden nach dem Spritzgiessen miteinander zu dem Preform verbunden. In der US 2004/0146673 A1 kann das Halsteil als Manschette ausgeformt werden, welches um den Hals des Hohlkörpers gelegt wird.

Aus der WO/12397 A2 ist ein Flaschenhalter bekannt, welcher zwei auf einer Seite gelenkig miteinander verbundene Haltelaschen aufweist. Auf der anderen Seite lassen sich die Haltelaschen in der Art eines Kabelbinder miteinander verbinden. Der Flaschenhalter kann an einem Flaschenhals einer Flasche befestigt werden, wodurch das Tragen der Flasche mit 2 Fingern erleichtert wird.

Die DE 10 2016102 040 A1 beschreibt eine Druckmaschine, welche wenigstens eine Komponente eines elektronischen Bauteils auf den Tragring oder einen Bereich unterhalb des Tragrings eines Vorformlings aufdruckt.

In der EP 2 439 033 A2 ist ein Kunststoffvorformling mit einer Markierung gezeigt, welche für wenigstens eine Eigenschaft des Kunststoffvorformlings charakteristisch ist. Diese Markierung liegt an einem in einer Längsrichtung des Kunststoffvorformlings unterhalb des Gewindebereichs liegenden Oberflächenabschnitt des Kunststoffvorformlings.

### Aufgabe der Erfindung

Aus den Nachteilen des Stands der Technik ergibt sich daher die Aufgabe der vorliegenden Erfindung einen Preform vorzuschlagen, welcher verbesserte Ausgestaltungsmöglichkeiten der herzustellenden Flasche erlaubt. Noch ein Ziel ist es, einen Preform zu zeigen, welcher eine Materialreduzierung und eine damit einhergehende Gewichtsre duzierung ermöglicht. Ein weiteres Ziel ist es, Informationen, welche das Preformmaterial, den Behälterinhalt, die Herkunft des Preforms usw. betreffen, möglichst einfach und gleichzeitig zuverlässig zur Verfügung zu stellen.

### Beschreibung

Die gestellte Aufgabe wird durch die Merkmale der unabhängigen Ansprüchen gelöst.

Ein Preform zur Herstellung von Kunststoffbehältern, insbesondere Kunststoffflaschen, umfasst üblicherweise einen länglichen Körper, einen Boden, welcher an einem ersten Längsende des Körpers ausgebildet ist, einen Halsabschnitt, welcher an einem zweiten Längsende des Körpers ausgebildet ist und dem ersten Längsende gegenüber liegt, eine Ausgiessöffnung, welche an dem Halsabschnitt vorgesehen ist und einen Stützring, welcher radial von dem Körper abragt und den Halsabschnitt von dem Körper trennt.

Die Lösung der gestellten Aufgabe gelingt bei einem spritzgegossenen Preform dadurch, dass der Stützring ein separates Stützelement ist, welches formschlüssig an dem Preform festlegbar ist. Gemäss dem Stand der Technik wird bei einem Zweistufen-Streckblasverfahren der Stützring zusammen mit dem Preform spritzgegossen, wodurch der Preform und der Stützring einstückig sind. Dadurch, dass der Stützring ein separates Stützelement ist, ist der Aussendurchmesser des Körpers nicht mehr durch den Aussendurchmesser des Stützrings limitiert. Der Aussendurchmesser des Stützrings muss zwar grösser sein als der Aussendurchmesser des Körpers, um den Preform zwischen den Produktionsschritten transportieren zu können. Die Grösse des Aussendurchmessers des Stützrings kann jedoch beliebig gross gewählt werden, da er von dem Preform bzw. dem produzierten Kunststoffbehälter abnehmbar ist. Dadurch ergeben sich ungeahnte Möglichkeiten des Designs von Kunststoffbehältern, welche im Zweistufen-Streckblasverfahren produziert werden. Insbesondere ist es durch die Erfindung ermöglicht, Kunststoffbehälter mit viel grösseren Aussendurchmessern zu produzieren.

Die Erfindung zeichnet sich dadurch aus, dass der Stützring von dem Preform abnehmbar ist. Dadurch stört ein grosser Aussendurchmesser des Stützrings das Design und die Funktion des produzierten Kunststoffbehälters nicht, denn er lässt sich von dem Kunststoffbehälter bzw. dem Preform abnehmen. Der abnehmbare Stützring ist wieder verwendbar und lässt sich auf einer Vielzahl von Preforms befestigen und von diesen wieder abnehmen. Dadurch lässt sich auch eine signifikante Menge an Material einsparen, da der Stützring nicht zusammen mit dem Preform spritzgegossen wird und nicht für jeden Preform ein einzelner Stützring benötigt wird.

Der Stützring weist einen Datenträger auf, welcher wenigstens Träger einer Identifikationsnummer ist. Dadurch, dass der Stützring von dem Preform abnehmbar ist, lässt sich Material zur Preformherstellung einsparen und die Identifikationsnummer lässt sich bei einem weiteren Preform wieder verwenden oder es wird eine neue Identifikationsnummer auf dem Datenträger gespeichert. Die Identifikationsnummer ermöglicht es, dass weitere Daten den Preform betreffend nicht auf dem Datenträger gespeichert sein müssen, sondern in einer externen Datenbank gespeichert sind. Durch die Identifikationsnummer können dem Preform bzw. dem daraus hergestellten Behälter eindeutig alle externen Daten zugewiesen werden. Da der Datenträger lediglich die Identifikationsnummer aufweist, kann dieser sehr einfach ausgestaltet sein. Denkbar ist es, dass die Oberfläche des Preforms oder des aus dem Preform hergestellten Kunststoffbehälters der Datenträger aufweist.

Bevorzugt ist es, wenn der Datenträger Informationen wie Produktionszeitpunkt und - ort, Preformmaterial und Informationen zur Wiederverwendbarkeit, Informationen zum Füllgutinhalt oder Informationen bezüglich eines Pfandsystems den Kunststoffbehälter betreffend trägt. Der Datenträger kann daher eine vollständige Beschreibung des Behälters und dessen Inhalt bereitstellen und es können auf dem Datenträger in flexibler Weise genau die Informationen gespeichert werden, welche vom Produzenten, dem Kunden und dem Wiederverwerter benötigt werden.

In einer bevorzugten Ausführungsform der Erfindung ist der Datenträger in Gestalt einer elektronischen Schaltung realisiert. Der abnehmbare Stützring, welcher die elektronische Schaltung aufweist, ermöglicht es, dass der Behälter bei seiner Entsorgung nicht als Elektronikschrott erachtet werden muss, sondern in üblicher Weise entsorgt oder wiederverwertet werden kann. Der Datenträger kann wiederbespielt werden und auf einem weiteren Preform wieder verwendet werden oder separat entsorgt werden.

Dadurch dass die elektronische Schaltung innerhalb oder auf dem Stützring positioniert ist, kann diese besonders gut geschützt bzw. befestigt sein, oder kann in einfacher Weise auf dem Stützring aufgebracht werden.

In einer besonders bevorzugten Ausführungsform der Erfindung ist die elektronische Schaltung ein RFID-Transponder. Unter einem RFID-Transponder (radio-frequency identification transponder) soll im Rahmen dieser Anmeldung eine elektronische Schaltung verstanden werden, aus welcher berührungslos Daten mit Hilfe elektroxnagnεtischer Wellen aus dem Transponder wenigstens ausgelesen werden können. Zum Auslesen wird ein Lesegerät benötigt. Bei einem passiven RFID-Transponder wird dessen Energieversorgung aus den Funksignalen des Lesegerätes bereitgestellt. Der Aufbau eines RFID-Transponders sieht prinzipiell eine Antenne, einen analogen Schaltkreis zum Empfangen und Senden (Transceiver) sowie einen digitalen Schaltkreis und einen permanenten Speicher vor. Der digitale Schaltkreis ist bei komplexeren Modellen ein kleiner Mikrocontroller. RFID-Transponder verfügen über einen mindestens einmal beschreibbaren Speicher, der ihre unveränderliche Identität enthält. Werden mehrfach beschreibbare Speicher eingesetzt, können während der Lebensdauer weitere Informationen abgelegt werden. Ein RFID-Transponder kann sehr kleinbauend ausgeführt werden und daher leicht in dem Stützring untergebracht werden. Bevorzugt ist der RFID-Transponder ein passiver RFID-Transponder, wenngleich auch ein aktiver RFID-Transponder mit einer eigenen Stromversorgung denkbar ist. Da die Daten über den Sender in den RFID-Transponder ein-und ausgelesen werden, muss der Datenträger nicht sichtbar sein und kann in dem Stützring eingegossen sein. Dadurch ist dieser besonders gut vor mechanischen Belastungen und Verschmutzungen geschützt. Durch Abnahme des Stützringes von dem Preform oder dem Kunststoffbehälter kann der RFID-Transponder auf einem weiteren Preform wiederverwendet werden oder separat entsorgt werden.

In einer weiteren bevorzugten Ausführungsform der Erfindung ist der Datenträger in lesbarer Form für ein Datenerfassungsgerät, beispielsweise als Strichcode oder QR-Code, an der Oberfläche des Stützringes angebracht. Diese Form des Datenträgers ist kostengünstig in der Herstellung, allerdings muss der Datenträger an der Oberfläche des Supportringes liegen, um sichtbar und damit lesbar zu sein. Auch andere Datenträger in lesbarer Form, beispielsweise ein dreidimensionales Wasserzeichen sind möglich.

Der erfindungsgemässe Preform wird vor allem zur Herstellung von Kunststoffbehältern in einem Zweistufen-Streckblasverfahren verwendet, weil der Stützring bei der Weiterverarbeitung des Preforms - wie zuvor erläutert - benötigt wird, damit Transportvorrichtungen und Haltevorrichtungen der Fertigungslinien angreifen können. Es sind jedoch auch Anwendungsfälle denkbar, bei dem ein Stützring in anderer Form beispielsweise in der Anlage zur Befüllung des fertigen Kunststoffbehälters als Transportvorrichtungen und Haltevorrichtungen genutzt wird.

In einer besonders bevorzugten Ausführungsform der Erfindung ist an dem Preform am Übergang von dem Halsabschnitt zu dem Körper eine sich in Umfangsrichtung des Preforms erstreckende Nut bevorzugt eine Ringnut vorgesehen, in welche der Stützring eingreifen kann. Der Stützring ist durch diese Ausgestaltungsform zuverlässig an dem Preform gehalten und kann trotzdem von diesem ohne Aufwand abgenommen bzw. abgezogen werden. Andere denkbare Ausgestaltungsformen der formschlüssigen Verbindung können Vorsprünge an dem Preform sein, in welche der Stützring greift oder dass der Stützring auf den Halsabschnitt aufschraubbar ist.

Als zweckdienlich hat es sich erwiesen, wenn die Nut einen Grund und eine erste und zweite an den Grund anschliessende Flanke umfasst. Die Nut ist im Querschnitt bevorzugt U-förmig, wodurch der Stützring weder nach oben oder unten an dem Preform abrutschen kann und auch bei mechanischen Belastungen während der Produktionsschritte zuverlässig an dem Preform gehalten ist.

In einer weiteren Ausgestaltungsform der Erfindung entspricht der Innendurchmesser des Stützrings im Wesentlichen dem Durchmesser des Grunds. Der Stützring ist daher spielfrei an dem Preform gehalten, wodurch auch mechanische Belastungen, welche während der Produktion auftreten, es nicht vermögen den Stützring von dem Preform zu trennen.

In einer weiteren Ausführungsform der Erfindung ist der Stützring offen und lässt sich derart aufweiten, dass er auf den Preform aufsteckbar ist, indem er in der Nut aufnehmbar ist. Der Stützring ist demnach einfach gestaltet und lässt sich maschinell auf den Preform aufstecken und von diesem abnehmen.

Zweckmässigerweise besitzt der Stützring einen Öffnungswinkel von kleiner als 180 Grad und grösser als 0 Grad, bevorzugt von kleiner als 160 Grad und grösser als 30 Grad und besonders bevorzugt von kleiner als 120 Grad und grösser als 70 Grad besitzt. Diese Bemassung ermöglicht es, dass der Stützring durch einfaches Verbiegen seiner Enden aufweitbar ist und auf den Preform aufsteckbar ist und von diesem abnehmbar ist.

In einer weiteren Ausführungsform der Erfindung besitzt der Stützring wenigstens ein Gelenk, um welches er aufklappbar und schliessbar ist. Bei dieser Ausführungsform kann der Stützring aus einem stabilen unelastischen Material hergestellt sein, da es keiner elastischen Materialverformung bedarf, um den Stützring auf dem Preform zu befestigen und von diesem abzunehmen. Denkbar ist es auch, dass der Stützring zwei Gelenke entlang seines Umfangs umfasst, wobei eines der Gelenke lösbar ist und sich der Stützring um das andere Gelenk aufklappen lässt. Diese Art der Befestigung ist besonders stabil.

In einer weiteren Ausführungsform der Erfindung, welche ebenfalls zu einer sehr stabilen Halterung führt, umfasst der Stützring zwei Halbkreissegmenten, welche aneinander befestigbar sind.

In einer weiteren Ausführungsform der Erfindung besteht der Stützring aus einem kunststoffummantelten Federstahl, aus Metall oder Kunststoff. Der Kunststoffmantel verhindert, dass der Preform beim Befestigen bzw. Abnehmen des Stützrings zerkratzt wird. Das Material des Stützrings ist abhängig davon zu wählen, wie weit der Stützring aufbiegbar sein muss, ohne dass das Material beschädigt wird.

In einer weiteren Ausführungsform der Erfindung besteht der Stützring aus einem elastischen Material und hat eine Mehrzahl von sich in radialer Richtung erstreckender und in axialer Richtung des Preforms aufbiegbarer Lamellen ausgebildet. Der Stützring lässt sich in axialer Richtung auf den Preform aufschieben, bis er in der Nut verrastet und lässt sich auch in axialer Richtung von dem Preform bzw. dem Kunststoffbehälter abziehen. In dieser Ausführungsform ist der Stützring in der Art des Maschinenelements eines Lamellenrings ausgeführt.

Zweckmässigerweise sind an dem Halsabschnitt Befestigungsmittel zur formschlüssigen Festlegung eines mit korrespondierenden Eingriffsmitteln ausgestatteten Verschlussteils ausgebildet. Dadurch lässt sich die Ausgiessöffnung des Kunststoffbehälters zu dem der Preform streckgeblasen wird mit dem Verschlussteil verschliessen.

In einer besonders bevorzugten Ausführungsform der Erfindung besitzt der Körper einen Aussendurchmesser, welcher den Aussendurchmesser des Halsabschnittes um mehr als 5 mm, bevorzugt um mehr als 10 mm und besonders bevorzugt um mehr 15 mm überragt. Dadurch, dass gemäss der Erfindung der Aussendurchmesser des Stützrings nicht mehr die limitierende Grösse für den Aussendurchmesser des Körpers darstellt, lässt sich dieser vergrössern. Dadurch ergeben sich hohe radiale Streckraten, da ausreichend Material vorhanden ist, welche dazu führen, dass bei dem hergestellten Kunststoffbehälter ein sehr grosser Aussendurchmesser relativ zum Aussendurchmesser des Halsabschnitts möglich ist. Solche Aussendurchmesser sind beim Stand der Technik unmöglich zu realisieren, da der Aussendurchmesser des Preformkörpers bei diesen Preforms durch den Aussendurchmesser des zusammen mit dem Preform gespritzten Stützrings limitiert ist. Denkbar wäre es auch, dass die Wandstärke des Preformkörpers zunimmt, indem der Innendurchmesser des Körpers verkleinert wird. D.h., dass der Aussendurchmesser des Körpers klein bleibt und der Innendurchmesser des Körpers verkleinert wird. Dies ist jedoch nicht bevorzugt, da dies zum einen zu erhöhten radialen Streckraten führt und andererseits der Innendurchmesser des Körpers durch den Aussendurchmesser des Streckdorns limitiert ist.

Die Erfindung zeichnet sich auch bevorzugt dadurch aus, dass das Verhältnis des Aussendurchmessers des Körpers zu dem Aussendurchmesser des Halsabschnittes zwischen 1,05 und 0,7 beträgt. Ein derart kleines Verhältnis von 0,7 ist deshalb möglich, da der Stützring, dessen Aussendurchmesser grösser als der Aussendurchmesser des Körpers sein muss, abnehmbar ist und auf dem Kunststoffbehälter nach dessen Produktion nicht mehr vorhanden ist. Wie bereits mehrfach beschrieben, ermöglicht es die Erfindung, dass der Kunststoffbehälter bei einem vorgegebenen standardmässigen Aussendurchmesser des Halsabschnittes einen sehr grossen Körperaussendurchmesser haben kann.

In einer weiteren bevorzugten Ausführungsform der Erfindung besitzt der Körper eine Wandstärke von 3 mm, bevorzugt von 5 mm und besonders bevorzugt von 7 mm, wobei der Innendurchmesser des Halsabschnitts und des Körpers im Wesentlichen gleich gross sind. Die nach aussen hin zunehmenden Wandstärken erlauben es Kunststoffbehälter mit grossen Aussendurchmessern zu erzeugen, ohne dass an dem Kunststoffbehälter ein Stützring mit einem nicht akzeptierbar grossen Aussendurchmesser vorhanden wäre.

Zweckmässigerweise besteht der Preform aus Polyethylenterephtalat oder Polypropylen. Diese Materialien sind dafür bekannt sich im Zweistufen-Streckblasprozess besonders gut verarbeiten zu lassen. Es können aber auch andere Materialen, wie beispielsweise Polyethylenfuranoat zur Herstellung von Preforms genutzt werden.

Ein weiterer Aspekt der Erfindung betrifft einen Preform, welcher Preform frei von einem Stützring ist und welcher Preform zwischen dem Körper und dem Halsabschnitt ein Befestigungsmittel zur formschlüssigen Festlegung eines mit einem korrespondierenden Eingriffsmittel ausgestatteten Stützrings ausgebildet hat. Da der Preform und der Stützring zwei separate Teile sind, müssen diese nicht zwangsläufig zusammen ausgeliefert werden. Aus ökonomischen Gründen ist es angestrebt, dass bereits zur Herstellung von Kunststoffbehältern verwendete Stützringe wiederverwendet werden und mit neuen spritzgegossenen Preforms verbunden werden. Dadurch lässt sich eine signifikante Menge an Produktionsmaterial einsparen. Der Materialeinsatz für den Preform ist daher reduziert, da er keinen Supportring aufweist. Das Materialvolumen des Preforms ist um das Volumen des Supportringes reduziert.

In einer weiteren bevorzugten Ausführungsform der Erfindung ist das Befestigungsmittel eine sich in Umfangsrichtung des Preforms erstreckende Nut ist. Die Nut ermöglicht eine besonders zuverlässige Halterung des Stützrings an dem Preform. Denkbar wären jedoch auch andere Befestigungsmittel, wie ein Aussengewinde auf welches der Stützring aufgeschraubt wird oder Vorsprünge, auf welche der Stützring aufgesteckt wird. Noch ein Aspekt der Erfindung betrifft einen Stützring zur Befestigung an einem Preform. In vorteilhafter Weise weist der Stützring einen Datenträger auf, welcher wenigstens Träger einer Identifikationsnummer ist. Die Vorteile des Datenträgers wurden weiter oben bereits beschrieben.

In einer besonders bevorzugten Ausführungsform ist der Datenträger eine elektronische Schaltung, welche innerhalb oder auf dem Stützring positioniert ist oder der Datenträger ist in lesbarer Form für ein Datenerfassungsgerät, beispielsweise als Strichcode oder QR-Code, an der Oberfläche des Stützringes angebracht.

Noch ein Aspekt betrifft einen Kunststoffbehälter hergestellt in einem Zweistufen-Streckblasverfahren aus einem oben beschriebenen vorzugsweise spritzgegossenen Preform, wobei zwischen dem Körperabschnitt und dem Behälterhals ein Befestigungsmittel zur formschlüssigen Festlegung eines mit einem korrespondierenden Eingriffsmittel ausgestatteten Stützrings ausgebildet ist. Wie bereits ausführlich beschrieben, ist es Wesen der Erfindung, dass der Stützring von dem Preform bzw. von dem Kunststoffbehälter abnehmbar ist. Dadurch wirken sich der Aussendurchmesser des Stützringes und auch die Gestalt des Stützrings nicht auf das Design des Kunststoffbehälters aus, da der Stützring an dem fertig produzierten Kunststoffbehälter nicht mehr vorhanden ist. Der Aussendurchmesser des Stützrings kann daher beliebige Grössen besitzen, solange die Produktionsabläufe dadurch nicht behindert werden.

In einer weiteren besonders bevorzugten Ausführungsform der Erfindung beträgt, das Verhältnis des Behälterhalsdurchmessers zum Aussendurchmesser des Körperabschnitts 3 bis 6, insbesondere 3,8 bis 5,5. Bei einem standardmässigen Behälterhalsdurchmesser von < 25 mm, wie er bei PET-Flaschen üblich ist, lassen sich somit Aussendurchmesser von etwa 150 mm realisieren. Dies gilt insbesondere auch für im Querschnitt ovale PET-Flaschen. Mit spritzgegossenen Preforms gemäss dem Stand der Technik ist es nicht möglich Kunststoffbehälter mit solchen Abmessungen zu produzieren.

Ein weiterer Aspekt der Erfindung Betrifft ein Verfahren zur Herstellung von Kunststoffbehältern, insbesondere Kunststoffflaschen, in einem Zweistufen-Streckblasverfahren und ein Verfahren zur Bereitstellung von Daten die hergestellten Kunststoffbehälter betreffend. Gemäss der vorliegenden Erfindung wird auf den Preform nach dem Spritzgiessen ein Stützring formschlüssig zwischen dem Körper und dem Halsabschnitt befestigt. Der Stützring wird daher nicht zusammen mit dem Preform einstückig spritzgegossen, sondern wird als separates Stützelement nach Herstellung des Preforms auf diesem festgelegt. Der Stützring kann gemäss der vorliegenden Erfindung auch zusammen mit dem Preform in einer gemeinsamen Spritzgussform nach einem 2-Komponenten-Spritzgiessverfahren hergestellt werden. Der Stützring kann aus einem anderen Material gefertigt sein als der Preform, damit sich dieser von dem Preform abnehmen lässt. Sofern die verwendeten Kunststoffe keine Bindung miteinander eingehen, ist auf diese Weise eine einfache Bestückung des Preforms mit einem abnehmbaren Stützring in einem einzigen Produktionschritt möglich.

In einer weiteren besonders bevorzugten Ausführungsform der Erfindung wird während der Herstellung des Stützringes ein Datenträger in Gestalt einer elektronischen Schaltung in die Spritzgussform eingelegt und wird von dem Stützring umspritzt. Die elektronische Schaltung ist dadurch besonders gut geschützt und gehalten. Vorrausetzung dafür ist, dass die Daten ohne ein optisches Verfahren aus dem Datenträger auslesbar sind, da der Datenträger nicht sichtbar ist.

In einer weiteren Ausführungsform der Erfindung wird der Stützring in der Spritzgussmaschine, bevorzugt während des Abkühlprozesses, oder nach Entfernen des Preforms aus der Spritzgussmaschine an dem Preform befestigt, falls der Stützring getrennt von dem Preform hergestellt wird. Ziel ist es, das Verfahren durch den zusätzlichen Befestigungsschritt des Stützrings nicht zu verlängern. Deshalb wird der Stützring synchron zu einem bestehenden Verfahrensschritt an dem Preform befestigt.

In einer weiteren Ausführungsform der Erfindung wird der Stützring bei geschlossenem Formwerkzeug oder nach dem Entformen des Kunststoffbehälters von der Kunststoffbehälter abgenommen. Auch bei der Abnahme des Stützringes ist es Ziel durch diesen zusätzlichen Verfahrensschritt keine zusätzliche Zeit während der Produktion des Kunststoffbehälters zu verlieren. Da die Stückzahlen und die Taktzahlen bei dem Herstellverfahren sehr hoch sind, kann schon ein geringer zusätzlicher Zeitaufwand zu einer signifikanten Verschlechterung der Produktivität führen. Daher wird der Stützring bevorzugt während des Streckblasens oder dem Transportschritt des Kunststoffbehälters von dem Formwerkzeug auf einem Transportband oder während des Verpackungsschrittes des Kunststoffbehälters von dem Kunststoffbehälter abgenommen.

Zweckmässigerweise werden auf den Datenspeicher während des Produktionsprozesses des Kunststoffbehälters und/oder während des Befüllungsprozesses des Kunststoffbehälters Daten eingelesen. Dadurch sind auf dem Datenspeicher Daten vorhanden, welche relevant für den Produktionsprozess sind. Die Rückverfolgbarkeit des Produktionsprozesses ist daher lückenlos auf dem Datenspeicher dokumentierbar.

Zweckmässigerweise werden von dem Datenspeicher während des Produktionsprozesses des Kunststoffbehälters und/oder während des Befüllungsprozess des Kunststoffbehälters Daten ausgelesen werden. Dadurch ist es denkbar, dass durch die ausgelesenen Daten der Produktionsprozess und/oder der Befüllungsprozess teilweise oder vollständig gesteuert werden kann.

In einer weiteren bevorzugten Ausführungsform der Erfindung werden von dem Datenspeicher während der Benutzung des Kunststoffbehälters und/oder während der Wiederverwertung des Kunststoffbehälters Daten ausgelesen. Dadurch kann der Konsument mit Daten informiert werden, welche beispielsweise auf einem Smartphone angezeigt werden können. Genauso können für die Wiederverwertung des Behälters relevante Daten aus dem Datenspeicher ausgelesen werden. Dadurch werden falsche Klassifizierungen oder Zuordnungen des Behälters bei der Wiederverwertung zuverlässig verhindert.

Als vorteilhaft erweist es sich, wenn der Stützring nach der Herstellung des Kunststoffbehälters oder nach der Befüllung des Kunststoffbehälters von dem Kunststoffbehälter entfernt wird. Insbesondere, wenn die auf dem Datenspeicher vorhandenen Daten nach der Produktion oder nach der Befüllung des Behälters nicht mehr benötigt werden und der Supportring auch keine Haltefunktion zu erfüllen hat, kann der Supportring abgenommen werden und wieder verwendet werden. Dadurch verbleibt ein sortenreiner Kunststoffbehälter, welcher problemlos entsorgt oder wiederverwertet werden kann. Der Supportring kann oftmals auf weitere Preforms aufgesteckt werden und erfüllt wieder die Haltefunktion und es können neue Daten eingelesen und ausgelesen werden oder die bestehenden Daten weiter verwendet werden. Das für den Supportring benötigte Material kann bei jedem Behälter, von dem der Supportring abgenommen wird, eingespart werden.

Als zweckmässig hat es sich erwiesen, wenn der Stützring vor der Entsorgung oder während der Wiederverwertung des Kunststoffbehälters von dem Kunststoffbehälter entfernt wird. Dadurch können auch dem Benutzer und dem Wiederverwerter des Behälters relevante Daten zur Verfügung gestellt werden. Der abgenommen Supportring kann einem Sammelsystem zugeführt werden. Dadurch kann der Supportring auf einen weiteren Preform aufgesteckt werden und der von dem Supportring getrennte Behälter kann sortenrein entsorgt bzw. wiederverwertet werden.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine erste Ausführungsform eines Preforms und eines Stützrings in axonometrischer Ansicht;
- Figur 2:: eine Frontansicht des Preforms aus Figur 1;
- Figur 3:: eine Schnittdarstellung des Preforms aus Figur 2 entlang der Schnittlinie III-III;
- Figur4:: eine zweite Ausführungsform des Preforms in einer Frontansicht;
- Figur 5:: eine Schnittdarstellung des Preforms aus Figur 3 entlang der Schnittlinie V-V;
- Figur 6:: eine dritte Ausführungsform des Preforms in einer Frontansicht;
- Figur 7:: eine Schnittdarstellung des Preforms aus Figur 6 entlang der Schnittlinie VII-VII;
- Figur 8:: eine zweite Ausführungsform des Stützrings;
- Figur 9:: eine dritte Ausführungsform des Stützrings;
- Figur 10:: eine vierte Ausführungsform des Stützrings
- Figur 11:: eine fünfte Ausführungsform des Stützrings mit einer ersten Ausführungsform eines Datenträgers und
- Figur 12:: die fünfte Ausführungsform des Stützrings mit einer zweiten Ausführungsform eines Datenträgers.

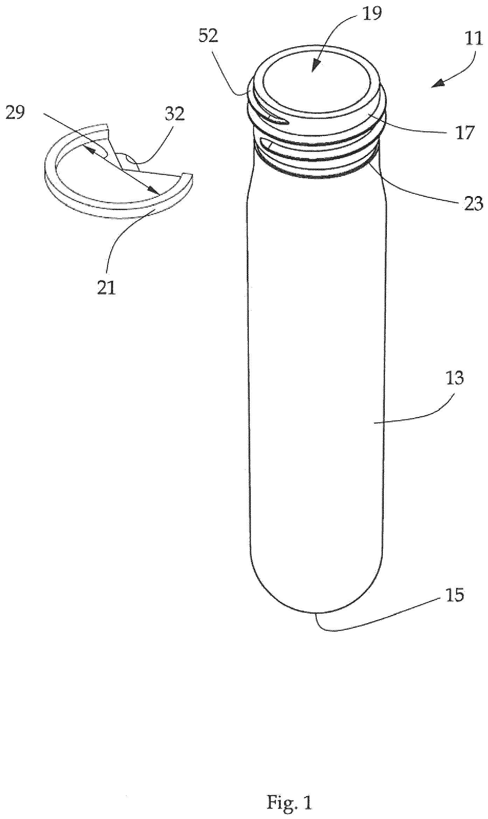

In den Figuren 1 bis 7 ist ein Preform gezeigt, welcher gesamthaft mit dem Bezugszeichen 11 bezeichnet ist. Der Preform 11 dient der Herstellung von Kunststoffbehältern und insbesondere der Herstellung von Kunststoffflaschen in einem Zweistufen-Streckblasverfahren. In der ersten Stufe wird der Preform spritzgegossen und im Anschluss daran abgekühlt. In der zweiten Stufe wird der Preform gemäss einem vorgegebenen Temperaturprofil erwärmt und in einem Formwerkzeug biaxial vertreckt. Entlang der Längsachse wird der Preform mit einem Reckdorn verstreckt und in radialer Richtung wird er durch Aufblasen verstreckt.

Der Preform 11 umfasst einen länglichen Körper 13 mit einem ersten und zweiten Längsende. Am ersten Längsende ist ein Boden 15 ausgebildet, welcher auch den Boden des aus dem Preform 11 hergestellten Kunststoffbehälters bildet. Am zweiten Längsende ist ein Halsabschnitt 17 ausgebildet. An dem Halsabschnitt 17 ist eine Ausgiessöffnung 19 vorgesehen, durch welche der streckgeblasene Kunststoffbehälter befüllbar und entleerbar ist.

Im Gegensatz zum Stand der Technik wird ein Stützring 21 nicht zusammen mit dem Preform 11 spritzgegossen, sodass der Preform 11 und der Stützring einstückig sind. Vielmehr ist der Stützring 21 ein separates Stützelement, welches getrennt von dem Preform 11 hergestellt wird. Das Vorhandensein des Stützringes 21 ist im zweistufen-Streckblasen unumgänglich, da der Preform 11 bzw. der daraus hergestellte Kunststoffbehälter an dem Stützring 21 in dem Formwerkzeug gehalten wird und auch Transportmittel an dem Stützring 21 angreifen, um den Preform bzw. den Kunststoffbehälter zwischen den einzelnen Herstellungsstationen transportieren zu können bzw. den Herstellungsstationen zuführen zu können.

Der Stützring 21 ist formschlüssig an dem Preform 11 gehalten und lässt sich auf den Preform 11 aufstecken und von diesem abnehmen. Der Aussendurchmesser des Stützrings 21 ist der limitierende Faktor für den Aussendurchmesser des Preformkörpers 13. Um den Preform transportieren zu können, muss der Stützring gegenüber dem Preformkörper einen Überstand bilden. Deshalb muss der Aussendurchmesser des Preformkörpers grundsätzlich kleiner sein als der Aussendurchmesser des Stützringes. Da gemäss dem Stand der Technik der Stützring von dem Preform nicht abnehmbar ist, verbleibt er auch auf dem hergestellten Kunststoffbehälter. Auf diesem darf der Stützring jedoch einen bestimmten Aussendurchmesser nicht übersteigen, da dies für den Konsumenten nicht akzeptabel ist. Zusätzlich sind die mit einem vergrösserten Stützring einhergehenden Materialkosten und Gewichtszunahme nicht akzeptabel.

In überraschender Weise führt ein abnehmbarer Stützring 21 zu ungeahnten verbesserten Ausgestaltungsmöglichkeiten des herzustellenden Kunststoffbehälters. Nachdem der Stützring 21 von dem Preform 11 abnehmbar ist, kann er einen viel grösseren Aussendurchmesser besitzen, als wenn der Preform und der Stützring einstückig sind. Demzufolge kann auch der Preformkörper 13 einen grösseren Aussendurchmesser als Preformkörper des Stands der Technik besitzen. Dies führt dazu, dass der Preformkörper 13 mit einer nach aussen hin erhöhten Wandstärke spritzgegossen werden kann.

Dadurch lassen sich Kunststoffbehälter mit einem signifikant grösseren Aussendurchmesser streckblasen. Der Durchmesser des Halsabschnittes 17 ist unabhängig von dem Aussendurchmesser des Kunststoffbehälters und kann demzufolge beliebig klein gewählt werden, so wie es die Vorgaben an das Endprodukt fordern.

Das Festlegen und Abnehmen des Stützrings 21 von dem Preform 11 lässt sich dadurch realisieren, dass der Stützring 21 formschlüssig an dem Preform 11 gehalten ist. Der Formschluss kann beispielsweise dadurch erfolgen, dass der Stützring 21 in eine an dem Preform 11 vorgesehene Nut 23 eingreift. Die Nut 23 ist bevorzugt zwischen dem Halsabschnitt 17 und dem Körper 13 ausgebildet und erstreckt sich in Umfangsrichtung des Preforms 11. Bevorzugt handelt es sich um eine Ringnut, es kann aber auch eine Nut ausgebildet sein, welche den Umfang des Preforms 11 nicht vollständig, also nur teilweise, umschliesst.

Die Nut umfasst definitionsgemäss einen Grund 25 und eine erste und zweite Seitenflanke 27a,27b, welche an dem Grund 25 anschliessen. Um einen sicheren und wackelfreien Formschluss zwischen der Nut 23 und dem Stützring 21 zu realisieren, ist der Innendurchmesser 29 des Stützrings 21 derart bemasst, dass er im Wesentlichen dem Durchmesser 31 des Grunds 25 entspricht.

Der Stützring kann unterschiedliche Ausgestaltungsformen gemäss der Figuren 1 und 8 bis 11 besitzen, damit er an dem Preform 11 festlegbar ist und von diesem wieder abnehmbar ist. In der Figur 1 ist ein offener Stützring 21 gezeigt, dessen Öffnungswinkel 32 ca. 100 Grad beträgt. Je nachdem wie elastisch das Material ist, aus dem der Stützring 21 gefertigt ist, kann der Öffnungswinkel auch gegen 0 streben. Dann muss der Stützring 21 jedoch stark aus seiner Erstreckungsebene heraus verbogen werden, um auf den Preform aufgesteckt werden zu können. Der Öffnungswinkel muss jedoch kleiner als 180 Grad sein, damit er nicht von dem Preform 11 rutscht. Bevorzugt ist der Stützring 21 aus einem Kunststoff oder einem Metall. Die Materialwahl wird auch dadurch beeinflusst, ob der Stützring 21 mehrfach verwendet wird oder nach einmaligem Aufstecken und Abnehmen auf bzw. von dem Preform 11 verworfen wird.

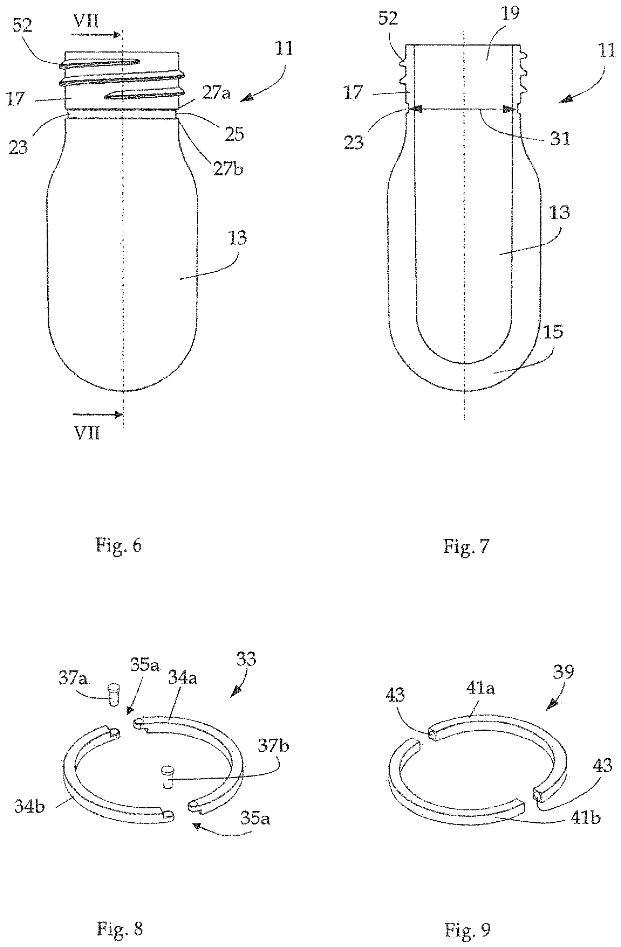

In der Figur 8 ist eine weitere Ausführungsform des Stützrings gezeigt, welche mit dem Bezugszeichen 33 beziffert ist. Der Stützring 33 ist zweiteilig ausgeführt. Die beiden offenen und bevorzugt halbkreisförmigen Teile 34a,34b des Stützrings sind mit einem ersten und zweiten Gelenk 35a,35b versehen. Die Gelenke 35a,35b weisen Bolzen 37a,37b auf. Die Bolzen 37a,37b halten die Teile des Stützrings 37 aneinander und die Teile können auch um einen der Bolzen 37a,37b verschwenkt werden, wenn der andere Bolzen aus seiner Halterung entfernt ist. Dadurch, dass die zwei Teile des Stützrings bevorzugt die Gestalt von Halbkreissegmenten aufweisen, welche mit den abnehmbaren Bolzen 37a,37b verdrehbar aneinander gehalten sind, lässt sich der Stützring rasch und werkzeuglos auf dem Preform 11 befestigen und auch wieder abnehmen.

In Figur 9 ist eine weitere Ausführungsform des Stützrings gezeigt, welche mit dem Bezugszeichen 39 bezeichnet ist. Auch dieser Stützring 39 umfasst zwei bevorzugt halbkreisförmige Teile 41a,41b. In dieser Ausführungsform sind die beiden Teile 41a,41b durch Magnete 43 aneinander gehalten. Die Magnetkraft ist derart bemasst, dass die Stützringteile 41a,41b während der Behälterproduktion durch äussere Belastungen nicht von dem Preform entfernt werden, jedoch mit Handkraft oder einer vergleichbaren Kraft einer Abnehmmaschine voneinander getrennt werden können.

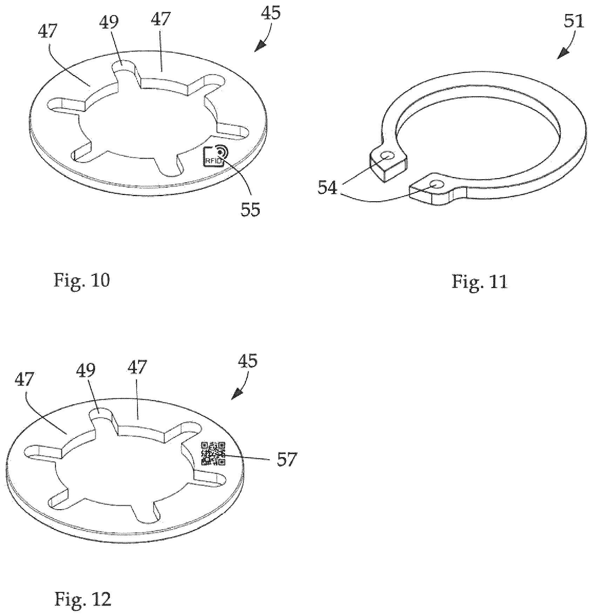

Der Stützring kann auch in einer Ausführungsform gemäss der Figur 10 gestaltet sein. Dieser Lamellenring bzw. Stützring 45 hat eine Mehrzahl von sich in radialer Richtung erstreckender Lamellen 47 ausgebildet, welche durch Vertiefungen 49 voneinander getrennt sind. Der Stützring 45 lässt sich von oben auf den Preform aufschieben, indem sich die Lamellen 47 in axialer Richtung aufbiegen lassen und in der Nut 23 durch ihre Rückstellkraft verrasten. Genauso einfach lässt sich der Stützring 45 in umgekehrter axialer Richtung von dem Preform 11 abziehen.

In der fünften Ausführungsform ist der Stützring als eine Art Seegerring 51 ausgeformt. Mit Hilfe einer Aufspreizzange, welche in Angriffslöchern 54 angreifen kann, lässt sich der Seeger Ring 51 in der Nut 23 positionieren und aus dieser entfernen.

Denkbar sind auch Stützringe in anderen Ausführungsformen, welche in der Nut aufgenommen werden können.

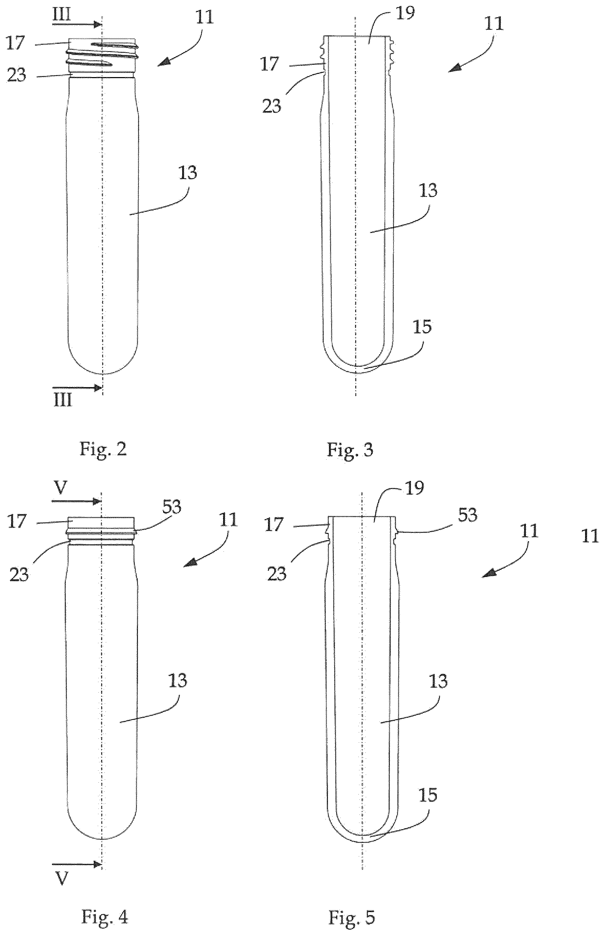

In den Figuren 2 bis 7 sind unterschiedlich ausgeformte Preforms 11 gezeigt, auf welche sich ein Stützring 21,33,39,45,51 gemäss obiger Beschreibung befestigen lässt und wieder abnehmen lässt. An dem Halsabschnitt 17 können Befestigungsmittel ausgebildet sein, um ein Verschlussteil formschlüssig an dem Halsabschnitt 17 befestigen zu können. Dies kann ein Aussengewinde 52 sein, wie in den Figuren 1, 2, 3, 6 und 7 gezeigt, welches mit dem Innengewinde eines Verschlussdeckels korrespondiert. In den Figuren 4 und 5 ist ein ringförmiger Absatz 53 mit einer Kante gezeigt, welcher mit einem korrespondierenden Deckel einen Schnappverschluss bildet.

Durch die vorliegende Erfindung lassen sich Kunststoffbehälter nach dem Zweistufen-Streckblasverfahren herstellen, deren Aussendurchmesser viel grösser ist als es der Stand der Technik bis jetzt erlaubte. Da der Stützring nach der Produktion des Kunststoffbehälters abnehmbar ist, stellt dieser keine limitierende Grösse für den Aussendurchmesser des Preforms 11 dar. Deshalb kann an dem Preform 11 an seiner Aussenwand Kunststoffmaterial vorgesehen sein, welches dessen Aussendurchmesser vergrössert. Das aufgebrachte Kunststoffmaterial in radialer Erstreckung ermöglicht die Ausformung von grossen Behälterdurchmessern, ohne dass das Kunststoffmaterial übersteckt werden würde. Der Aussendurchmesser des Stützrings, welcher aus produktionstechnischen Bedingungen grundsätzlich grösser sein muss als der Preformaussendurchmesser, hat keinen Einfluss, da der Stützring von dem fertigen Kunststoffbehälter abgenommen werden kann. In den Figuren 6 und 7 ist beispielsweise ein Preform 11 gezeigt, welcher einen Preformkörper 13 mit einem besonders grossen Aussendurchmesser besitzt, da die Wandstärke mit Kunststoffmaterial gezielt vergrössert wird. Die Wandstärke kann bis zu 6 mm betragen. Der Aussendurchmesser des Stützrings muss aus produktionstechnischen Gründen zwar grösser sein als der Aussendurchmesser des Körpers 13 - Da der Stützring abnehmbar ist, ist dieser an dem produzierten Kunststoffbehälter jedoch nicht mehr vorhanden und hat daher keinen Einfluss auf das Design des Endprodukts. Die erhöhte Wandstärke des Körpers 13 ermöglicht vergrösserte radiale Streckraten, wodurch ein Kunststoffbehälter mit einem grossen Aussendurchmesser des Körperabschnitts relativ zu dem Aussendurchmesser des Halsabschnittes herstellbar ist. Bevorzugt ist es, wenn die Wandstärke nach aussen zunimmt und der Innendurchmesser des Preforms 11 in axialer Richtung konstant ist. Dadurch liegt die Aussenseite des Körpers näher an den Hohlraumwänden des Formwerkzeugs. Dies führt dazu, dass ein Überstrecken des Preforms in radialer Richtung verhindert werden kann.

Das erfindungsgemässe Verfahren zur Herstellung von Kunststoffbehältern erfolgt in einem Zweistufen-Streckblasverfahren gemäss den folgenden Schritten:
In dem ersten Verfahrensschritt des Zweistufen-Streckblasverfahrens wird ein Preform 11 mit einem länglichen Körper 13, einem Boden 15, welcher an einem ersten Längsende des Körpers 13 ausgebildet ist, einem Halsabschnitt 17, welcher an einem zweiten Längsende des Körpers 13 ausgebildet ist und dem ersten Längsende gegenüber liegt und einer Ausgiessöffnung 19, welche an dem Halsabschnitt 17 vorgesehen, spritzgegossen.

In dem zweiten Verfahrensschritt des Zweistufen-Streckblasverfahrens wird der Preform 11 wieder erwärmt, in ein Formwerkzeug eingebracht und in dem Formwerkzeug zuerst durch einen Streckdorn in der Länge verstreckt und dann mit Druckluft aufgeblasen, und die fertige Kunststoffflasche wird aus dem Formwerkzeug entformt.

Ein Stützring 21,33,39,45,51 welcher für die Herstellung des Kunststoffbehälters im Zweistufen-Streckblasverfahren unerlässlich ist, wird nicht zusammen mit dem Preform 11 spritzgegossen. Vielmehr wird der Stützring 21,33,39,45,51 auf den Preform 11 nach dem Spritzgiessen zwischen dem Körper 13 und dem Halsabschnitt 17 befestigt. Der Stützring 21,33,39,45,51 ist daher ein separates Element, welches erst nach dem Spritzguss mit dem Preform 11 verbunden wird.

Um die Prozesszeiten möglichst kurz zu halten, ist es bevorzugt, wenn der Stützring 21,33,39,45,51 während des Abkühlprozesses des spritzgegossenen Preforms 11 mit diesem verbunden wird, bevorzugt dadurch, dass der Stützring 21,33,39,45,51 auf den Preform11 aufgesteckt wird. Der Stützring kann aber auch während eines an das Spritzgiessen folgenden Prozessschritts mit dem Preform verbunden werden. Von Bedeutung ist, dass der Stützring auf dem Preform befestigt ist, bevor der Preform in das Formwerkzeug eingesetzt wird.

Möglich ist es auch, den Stützring 21,33,39,45,51 und den Preform 11 zusammen in einer gemeinsamen Spritzgussform nach einem 2-Komponenten-Spritzgiessverfahren herzustellen. Der Stützring kann aus einem anderen Material gefertigt sein als der Preform, damit sich dieser von dem Preform abnehmen lässt. Sofern die verwendeten Kunststoffe keine Bindung miteinander eingehen, ist auf diese Weise eine einfache Bestückung des Preforms mit einem abnehmbaren Stützring möglich.

Um die Prozesszeiten weiterhin gar nicht oder nur unwesentlich zu verlängern wird der Stützring 21,33,39,45,51 während eines Prozessschrittes von dem fertig geblasenen Kunststoffbehälter abgenommen, nachdem der Kunststoffbehälter ausgeformt wurde.

Die Entfernung des Stützrings 21,33,39,45,51 kann bei noch geschlossenem Formwerkzeug durchgeführt werden. Wenn der Stützring jedoch für weitere Transportzwecke noch benötigt wird, so ist es sinnvoll diesen erst nach dem Entformen abzunehmen. Beispielsweise kann der Stützring während dem Transport zur Endverpackung oder Befüllung des Kunststoffbehälters erfolgen. Auch kann der Stützring während der Endverpackung des Kunststoffbehälters, beispielsweise der Palettierung, von dem Behälter entfernt werden.

Der Stützring 21,33,39,45,51 kann einen Datenträger aufweisen. Der Datenträger kann in oder auf dem Stützring 21,33,39,45,51 angebracht sein. Bevorzugt ist es, wenn der Datenträger durch eine elektronische Schaltung 55 realisiert ist. Die elektronische Schaltung kann ein RFID-Transponder 55 sein, insbesondere ein passiver RIFD-Transponder. Unter einem RFID-Transponder (radio-frequency identification transponder) soll im Rahmen dieser Anmeldung eine elektronische Schaltung verstanden werden, aus welcher berührungslos Daten mit Hilfe elektromagnetischer Wellen aus dem Transponder wenigstens ausgelesen und bevorzugt auch eingelesen werden können. Zum Auslesen wird ein Lesegerät benötigt. Bei einem passiven RFID-Transponder wird dessen Energieversorgung aus den Funksignalen des Lesegerätes bereitgestellt. Der Aufbau eines RFID-Transponders sieht prinzipiell eine Antenne, einen analogen Schaltkreis zum Empfangen und Senden (Transceiver) sowie einen digitalen Schaltkreis und einen permanenten Speicher vor. Der digitale Schaltkreis ist bei komplexeren Modellen ein kleiner Mikrocontroller. RFID-Transponder verfügen über einen mindestens einmal beschreibbaren Speicher, der ihre unveränderliche Identität enthält. Werden mehrfach beschreibbare Speicher eingesetzt, können während der Lebensdauer weitere Informationen abgelegt werden. Ein RFID-Transponder kann sehr kleinbauend ausgeführt werden und daher leicht in dem Stützring 21,33,39,45,51 untergebracht werden. In der Figur 11 ist stellvertretend für alle gezeigten Stützringe ein RFID-Transponder 55 an dem Stützring 45 angeordnet.

Folgende Informationen können beispielsweise in dem RFID-Transponder 55 gespeichert werden:
- eine eindeutige Identifikationsnummer
- der Produktionszeitpunkt und -ort
- das Material des Preforms 11 und Informationen zu dessen Rezyklierbarkeit
- Produktinformationen zum Inhalt des Behälters, welcher aus dem Preform 11 hergestellt ist,
- Informationen, ob es sich um einen Pfandbehälter handelt,
- Informationen, ob für die Flasche vom Endkonsumenten Pfand bezahlt wurde (bspw. durch Speichern einer entsprechenden Information beim Bezahlvorgang an Kassen) und
- Informationen hinsichtlich des Pfandsystems, d.h. es können Informationen gespeichert werden, die Auskunft darüber geben, welches Pfandsystem zur Anwendung gelangt.

Denkbar ist es, dass nur die Identifikationsnummer in dem RFID-Transponder 55 gespeichert ist und diese eindeutig anderen Informationen zuordenbar ist, welche extern gespeichert sind. Die Identifikationsnummer kann bei dieser Ausführungsform in Verbindung mit einer Datenbank dazu genutzt werden, die übrigen Informationen zentral zu speichern und über die Identifikationsnummer abrufbar zu machen. Ein Abspeichern der übrigen Informationen kann dann auf dem permanenten Speicher entfallen, wodurch die Speicherkapazität gering gehalten werden kann.

Während der Herstellung des Stützringes 21,33,39,45,51 kann der Datenträger in Gestalt einer elektronischen Schaltung in die Spritzgussform eingelegt werden und von dem Stützring umspritzt werden. Dann befindet sich der Datenträger, beispielsweise der RFID-Transponder 55, innerhalb des Stützringes und ist zuverlässig vor mechanischen Beschädigungen oder Verschmutzung geschützt. Der RFID-Transponder 55 muss nicht sichtbar an dem Stützring angebracht sein, da die Datenübertragung über Funk erfolgt. Deshalb wird ein RFID-Transponder auch als "Funketikett" bezeichnet.

Insbesondere für den Fall dass der Datenträger in Form einer elektronischen Schaltung realisiert ist, ist es wichtig, dass der Supportring 21,33,39,45,51 abnehmbar ist. Wäre nämlich die elektronische Schaltung in der Wand- oder Bodenfläche eine Behälters verbaut, so wäre der gesamte Behälter nach Gebrauch nur schwer recyclebarer Abfall und als Elektronikschrott zu behandeln. Dessen Entsorgung wäre deutlich aufwändiger als die Entsorgung reiner Kunststoffbehälter.

Der Datenträger kann auch in lesbarer Form für ein Datenerfassungsgerät, beispielsweise als Strichcode oder QR-Code, an der Oberfläche des Stützringes 21,33,39,45,51 angebracht sein. Denkbar ist es auch anstatt eines Strichcodes oder eines QR-Codes ein Wasserzeichen in zweidimensionaler oder dreidimensionaler Form zu verwenden, um lesbare Daten bereit zu stellen. In der Figur 12 ist stellvertretend für alle gezeigten Stützringe ein lesbarer Datenträger in Gestalt eines QR-Codes 57 an dem Stützring 45 angeordnet.

Der abnehmbarer Stützring 21,33,39,45,51 kann während des Produktionsprozesses des Behälters bzw. während der Befüllung wegen seiner primären Funktion als Halteelement genutzt werden. Zusätzlich können während des Produktionsprozesses bzw. während dessen Befüllung Daten auf den RFID-Transponder 55 aufgespielt oder ausgelesen, welche relevant für den Produktionsprozess sind. Beim Verlassen der Produktion bzw. der Füllanlage kann der Stützring 21,33,39,45,51 entfernt werden und somit ist der Materialeinsatz zur Herstellung des Preforms 11 bzw. des Behälters deutlich verringert. Ebenso ist denkbar, dass während der Produktion des Behälters oder während dessen Befüllung Daten auf den RFID-Transponder 55 aufgespielt werden, die für den Endkonsumenten oder die für eine Wiederverwertung des für den Behälter eingesetzten Materials von Bedeutung sind. In diesem Fall erfüllt der Stützring die Funktion des Datenträgers, der leicht von dem Behälter abgetrennt werden kann, um einerseits die Vorteile eines elektronischen, wiederbeschreibbaren Speichermediums zu nutzen und andererseits eine problemlose Wiederverwertung des Behälters zu ermöglichen.

### Legende:

- 11: Preform
- 13: Länglicher Preformkörper
- 15: Boden
- 17: Halsabschnitt
- 19: Ausgiessöffnung
- 21: Stützring in einer ersten Ausführungsform
- 23: Nut
- 25: Grund der Nut
- 27a,27b: Erste und zweite Seitenflanke der Nut
- 29: Innendurchmesser des Stützrings
- 31: Durchmesser des Grunds
- 32: Öffnungswinkel des Stützrings 21
- 33: Stützring in einer zweiten Ausführungsform
- 34a,34b: Teile des Stützrings 33
- 35a,35b: Erstes und zweites Gelenk des Stützrings
- 37a,37b: Bolzen
- 39: Stützring in einer dritten Ausführungsform
- 41a,41b: Teile des Stützrings 39
- 43: Magnete
- 45: Stützring in einer vierten Ausführungsform, Lamellenring
- 47: Lamellen
- 49: Vertiefungen
- 51: Stützring in einer fünften Ausführungsform, Seeger-Ring
- 52: Aussengewinde
- 53: Ringförmiger Absatz
- 54: Angriffslöcher
- 55: Elektronische Schaltung, RFID-Transponder
- 57: QR-Code

## Patentansprüche

1. Preform (11) zur Herstellung von Kunststoffbehältern, insbesondere Kunststoffflaschen, in einem Zweistufen-Streckblasverfahren umfassend
- einen länglichen Körper (13),
- einen Boden (15), welcher an einem ersten Längsende des Körpers (13) ausgebildet ist,
- einen Halsabschnitt (17), welcher an einem zweiten Längsende des Körpers (13) ausgebildet ist und dem ersten Längsende gegenüber liegt,
- eine Ausgiessöffnung (19), welche an dem Halsabschnitt (17) vorgesehen ist und
- einen Stützring (21,33,39,45,51), welcher
- radial von dem Körper abragt und den Halsabschnitt von dem Körper trennt und
- einen Datenträger aufweist, welcher wenigstens Träger einer Identifikationsnummer ist,
**dadurch gekennzeichnet,**
**dass** der Stützring (21,33,39,45,51) ein separates Stützelement ist, welches formschlüssig an dem Preform (11) festlegbar ist und von diesem wieder abnehmbar ist.

2. Preform nach Anspruch 1, **dadurch gekennzeichnet, dass** der Datenträger Informationen wie Produktionszeitpunkt und -ort, Preformmaterial und Informationen zur Wiederverwendbarkeit, Informationen zum Füllgutinhalt oder Informationen bezüglich eines Pfandsystems den Kunststoffbehälter betreffend trägt.

3. Preform nach Anspruch 2, **dadurch gekennzeichnet, dass** der Datenträger in Gestalt einer elektronischen Schaltung (55) realisiert ist.

4. Preform nach Anspruch 3, **dadurch gekennzeichnet, dass** die elektronische Schaltung (55) innerhalb oder auf dem Stützring (21,33,39,45,51) positioniert ist.

5. Preform nach Anspruch 3 oder 4, **dadurch gekennzeichnet, dass** die elektronische Schaltung ein RFID-Transponder (55) ist.

6. Preform nach Anspruch 1 oder 2, **dadurch gekennzeichnet, dass** der Datenträger in lesbarer Form für ein Datenerfassungsgerät, beispielsweise als Strichcode oder QR-Code (57), an der Oberfläche des Stützringes (21,33,39,45,51) angebracht ist.

7. Stützring zur Befestigung an einem Preform (11), welcher Preform (11) einen Halsabschnitt (17) und einen an den Halsabschnitt (17) angrenzenden Körper (13) aufweist und welcher Preform (11) der Herstellung eines Kunststoffbehälters dient, wobei der Stützring (21,33,39,45,51) einen Datenträger aufweist, welcher wenigstens Träger einer Identifikationsnummer ist"
**dadurch gekennzeichnet,**
**dass** der Stützring (21,33,39,45,51) zwischen dem Halsabschnitt (17) und dem Körper (13) befestigbar ist und von dem Preform wieder abnehmbar ist.

8. Stützring nach Anspruch 7, **dadurch gekennzeichnet, dass** der Datenträger eine elektronische Schaltung (55) ist, welche innerhalb oder auf dem Stützring (21,33,39,45,51) positioniert ist oder in lesbarer Form für ein Datenerfassungsgerät, beispielsweise als Strichcode oder QR-Code (57), an der Oberfläche des Stützringes (21,33,39,45,51) angebracht ist.

9. Verfahren zur Herstellung von Kunststoffbehältern, insbesondere Kunststoffflaschen, in einem Zweistufen-Streckblasverfahren, und zur Bereitstellung von Daten die hergestellten Kunststoffbehälter betreffend, wobei bei dem Zweistufen-Streckblasverfahren
- in einem ersten Verfahrensschritt ein Preform (11) mit einem länglichen Körper (13), einem Boden (15), welcher an einem ersten Längsende des Körpers (13) ausgebildet ist, einem Halsabschnitt (17), welcher an einem zweiten Längsende des Körpers (13) ausgebildet ist und dem ersten Längsende gegenüber liegt und einer Ausgiessöffnung (19), welche an dem Halsabschnitt (17) vorgesehen ist, spritzgegossen wird und
- in einem zweiten Verfahrensschritt der Preform (11) wieder erwärmt wird, in ein Formwerkzeug eingebracht wird und in dem Formwerkzeug zuerst durch einen Streckdorn in der Länge verstreckt und dann mit Druckluft zur radialen Verstreckung aufgeblasen wird, und die fertige Kunststoffflasche aus dem Formwerkzeug entformt wird,
**dadurch gekennzeichnet,**
**dass** auf den Preform (11) nach dem Spritzgiessen ein Stützring (21,33,39,45,51) zwischen dem Körper (13) und dem Halsabschnitt (17) formschlüssig befestigt wird und von diesem wieder abnehmbar ist,
wobei der Stützring (21,33,39,45,51) einen Datenträger aufweist, welcher wenigstens Träger einer Identifikationsnummer ist

10. Verfahren nach Anspruch 9, **dadurch gekennzeichnet, dass** während der Herstellung des Stützringes (21,33,39,45,51) der Datenträger in Gestalt einer elektroruschen Schaltung (55) in die Spritzgussform eingelegt wird und von dem Stützring (21,33,39,45,51) umspritzt wird.

11. Verfahren nach Anspruch 9 oder 10, **dadurch gekennzeichnet, dass** der Stützring (21,33,39,45,51) in der Spritzgussmaschine, bevorzugt während des Abkühlprozesses, oder nach Entfernen des Preforms aus der Spritzgussmaschine an dem Preform (11) befestigt wird, falls der Stützring (21,33,39,45,51) getrennt von dem Preform (11) hergestellt wird.

12. Verfahren nach einem der Ansprüche 9 bis 11, **dadurch gekennzeichnet, dass** der Stützring (21,33,39,45,51) bei geschlossenem Formwerkzeug oder nach dem Entformen des Kunststoffbehälters von der Kunststoffbehälter abgenommen wird.

13. Verfahren nach Anspruch 12, **dadurch gekennzeichnet, dass** der Stützring (21,33,39,45,51) während dem Transportschritt des Kunststoffbehälters von dem Formwerkzeug auf einem Transportband oder während des Verpackungsschrittes des Kunststoffbehälters von dem Kunststoffbehälter abgenommen wird.

14. Verfahren nach einem der Ansprüche 10 bis 13, **dadurch gekennzeichnet, dass** auf den Datenspeicher während des Produktionsprozesses des Kunststoffbehälters und/oder während des Befüllungsprozesses des Kunststoffbehälters Daten eingelesen werden.

15. Verfahren nach einem der Ansprüche 10 bis 14, **dadurch gekennzeichnet, dass** von dem Datenspeicher während des Produktionsprozesses des Kunststoffbehälters und/oder während des Befüllungsprozess des Kunststoffbehälters Daten ausgelesen werden.

16. Verfahren nach einem der Ansprüche 10 bis 15, **dadurch gekennzeichnet, dass** von dem Datenspeicher während der Benutzung des Kunststoffbehälters und/oder während der Wiederverwertung des Kunststoffbehälters Daten ausgelesen werden.

17. Verfahren nach einem der Ansprüche 9 bis 16, **dadurch gekennzeichnet, dass** der Stützring (21,33,39,45,51) nach der Herstellung des Kunststoffbehälters oder nach der Befüllung des Kunststoffbehälters von dem Kunststoffbehälter entfernt wird.

18. Verfahren nach einem der Ansprüche 9 bis 17, **dadurch gekennzeichnet, dass** der Stützring (21,33,39,45,51) vor der Entsorgung oder während der Wiederverwertung des Kunststoffbehälters von dem Kunststoffbehälter entfernt wird.

## Claims

1. Preform (11) for manufacturing plastic containers, in particular plastic bottles, in a two-step stretch blow molding process comprising:
- an elongate body (13),
- a bottom (15) that is configured at a first longitudinal end of the body (13),
- a neck portion (17) that is configured at a second longitudinal end of the body (13) and that is opposite to the first longitudinal end,
- a pouring aperture (19) that is provided on the neck portion (17) and
- a support ring (21, 33, 39, 45, 51) that
- radially projects from the body and separates the neck portion from the body and
- includes a data carrier that is at least the carrier of an identification number,
**characterized in**
**that** the support ring (21, 33, 39, 45, 51) is a separate support element that can be positively secured on the preform (11) and that can be removed again therefrom.

2. Preform according to claim 1, **characterized in that** the data carrier carries information such as date and place of production, preform material and information about reusability, information about filling material content or information about a refund system concerning the plastic container.

3. Preform according to claim 2, **characterized in that** the data carrier is realized as an electronic circuit (55).

4. Preform according to claim 3, **characterized in that** the electronic circuit (55) is positioned inside or on the support ring (21, 33, 39, 45, 51).

5. Preform according to claim 3 or 4, **characterized in that** the electronic circuit (55) is a RFID transponder (55).

6. Preform according to claim 1 or 2, **characterized in that** the data carrier is affixed in readable form for a data collector, for example as barcode or as QR code (57), on the surface of the support ring (21, 33, 39, 45, 51).

7. Support ring for attaching on a preform (11), which preform (11) includes a neck portion (17) and a body (13) adjacent to the neck portion (17) and which preform (11) serves for manufacturing the plastic container, wherein the support ring (21, 33, 39, 45, 51) includes a data carrier that is at least the carrier of an identification number,
**characterized in**
**that** the support ring (21, 33, 39, 45, 51) can be fixed between the neck portion (17) and the body (13) and can be removed again therefrom.

8. Support ring according to claim 7, **characterized in that** the data carrier is an electronic circuit (55) that is positioned inside or on the support ring (21, 33, 39, 45, 51) or that is affixed in readable form for a data collector, for example as barcode or as QR code (57), on the surface of the support ring (21, 33, 39, 45, 51).

9. Method for manufacturing plastic containers, in particular plastic bottles, in a two-step stretch blow molding process and for providing data concerning the manufactured plastic containers, wherein in the two-step stretch blow molding process
- in a first process step, a preform (11) is injection molded with an elongate body (13), a bottom (15) that is configured at a first longitudinal end of the body (13), a neck portion (17) that is configured at a second longitudinal end of the body (13) and that is opposite to the first longitudinal end and a pouring aperture (19) that is provided on the neck portion (17) and
- in a second process step, the preform (11) is re-heated, brought into a molding tool and stretched in length in the molding tool first by a mandrel and then blown up with compressed air for the radial stretching and the finished plastic bottle is demolded from the molding tool,
**characterized in**
**that** a support ring (21, 33, 39, 45, 51) is positively secured on the preform (11) between the body (13) and the neck portion (17) after the injection molding and can be removed again therefrom, wherein the support ring (21, 33, 39, 45, 51) includes a data carrier that is at least the carrier of an identification number.

10. Method according to claim 9, **characterized in that** during the manufacturing of the support ring (21, 33, 39, 45, 51) the data carrier in the form of an electronic circuit is inserted into the injection mold and is overmolded by the support ring (21, 33, 39, 45, 51).

11. Method according to claim 9 or 10, **characterized in that** the support ring (21, 33, 39, 45, 51) is fixed in the injection molding machine, preferably during the cooling process, or after removal of the preform out of the injection molding machine in case the support ring (21, 33, 39, 45, 51) is manufactured separately from the preform (11).

12. Method according to one of the claims 9 to 11, **characterized in that** the support ring (21, 33, 39, 45, 51) is removed from the plastic container, the molding tool being closed, or after demolding of the plastic container.

13. Method according to claim 12, **characterized in that** the support ring (21, 33, 39, 45, 51) is removed from the plastic container during the transport step of the plastic container from the molding tool to a transport band, or during the packing step of the plastic container.

14. Method according to one of the claims 10 to 13, **characterized in that** data are read into the data memory during the manufacturing process of the plastic container and/or during the filling process of the plastic container.

15. Method according to one of the claims 10 to 14, **characterized in that** data are read out of the data memory during the manufacturing process of the plastic container and/or during the filling process of the plastic container.

16. Method according to one of the claims 10 to 15, **characterized in that** data are read out of the data memory during the use of the plastic container and/or during the recycling of the plastic container.

17. Method according to one of the claims 9 to 16, **characterized in that** the support ring (21, 33, 39, 45, 51) is removed from the plastic container after the manufacturing of the plastic container or after the filling of the plastic container.

18. Method according to one of the claims 9 to 17, **characterized in that** the support ring (21, 33, 39, 45, 51) is removed from the plastic container before the disposal or during the recycling of the plastic container.

## Revendications

1. Préforme (11) pour la fabrication de récipients en matière plastique, en particulier de bouteilles en matière plastique, dans un procédé d'étiragesoufflage en deux étapes, comprenant :
- un corps allongé (13),
- un fond (15) qui est formé à une première extrémité longitudinale du corps (13),
- une portion de col (17) qui est formée à une seconde extrémité longitudinale du corps (13) et qui est située en face de la première extrémité longitudinale,
- une ouverture verseuse (19) qui est prévue sur la portion de col (17) et
- un anneau de support (21, 33, 39, 45,51) qui
- fait saillie radialement du corps et qui sépare la portion de col du corps et
- qui présente un support de données qui est au moins le support d'un numéro d'identification,
**caractérisée en ce**
**que** l'anneau de support (21, 33, 39, 45, 51) est un élément d'appui séparé qui peut être bloqué par complémentarité de formes sur la préforme (11) et qui peut en être enlevé à nouveau.

2. Préforme selon la revendication 1, **caractérisée en ce que** le support de données porte des informations comme date et lieu de production, matière de la préforme et des informations sur l'aptitude à la réutilisation, des informations sur le contenu de la matière de remplissage ou des informations au sujet d'un système de consigne qui concernent le récipient en matière plastique.

3. Préforme selon la revendication 2, **caractérisée en ce que** le support de données est réalisé sous forme d'un circuit électronique (55).

4. Préforme selon la revendication 3, **caractérisée en ce que** le circuit électronique (55) est positionné à l'intérieur de ou sur l'anneau de support (21, 33, 39, 45, 51).

5. Préforme selon la revendication 3 ou 4, **caractérisée en ce que** le circuit électronique est un transpondeur RFID (55).

6. Préforme selon la revendication 1 ou 2, **caractérisée en ce que** le support de données est fixé sous forme lisible pour un appareil d'acquisition de données, par exemple comme code-barres ou QR code (57), à la surface de l'anneau de support (21, 33, 39, 45,51).

7. Anneau de support pour la fixation à une préforme (11), laquelle préforme (11) présente une portion de col (17) et un corps (13) adjacent à la portion de col (17) et laquelle préforme (11) sert à la fabrication d'un récipient en matière plastique, cependant que l'anneau de support (21, 33, 39, 45, 51) présente un support de données qui est au moins le support d'un numéro d'identification,
**caractérisé en ce**
**que** l'anneau de support (21, 33, 39, 45,51) peut être fixé entre la portion de col (17) et le corps (13) et peut être enlevé à nouveau de la préforme.

8. Anneau de support selon la revendication 7, **caractérisé en ce que** le support de données est un circuit électronique (55) qui est positionné à l'intérieur de ou sur l'anneau de support (21, 33, 39, 45,51) ou qui est fixé sous forme lisible pour un appareil d'acquisition de données, par exemple comme code-barres ou QR code (57), à la surface de l'anneau de support (21, 33, 39, 45, 51).

9. Procédé pour la fabrication de récipients en matière plastique, en particulier de bouteilles en matière plastique, dans un procédé d'étirage-soufflage en deux étapes et pour la mise à disposition de données qui concernent les récipients fabriqués en matière plastique, cependant que, dans le procédé d'étiragesoufflage en deux étapes,
- dans une première étape de procédé, une préforme (11) avec un corps allongé (13), un fond (15) qui est configuré à une première extrémité longitudinale du corps (13), une portion de col (17) qui est configurée à une seconde extrémité longitudinale du corps (13) et qui est située en face de la première extrémité longitudinale, et une ouverture verseuse (16) qui est prévue sur la portion de col (17) est moulée par injection et
- dans une seconde étape de procédé, la préforme (11) est réchauffée à nouveau, mise en place dans un outil de moulage et étirée en longueur dans l'outil de moulage tout d'abord par un mandrin d'étirage et est ensuite gonflée avec de l'air sous pression pour l'étirement radial et la bouteille finie en matière plastique est démoulée de l'outil de moulage,
**caractérisé en ce**
**qu'**un anneau de support (21, 33, 39, 45,51) est fixé par complémentarité de formes entre le corps (13) et la portion de col (17) sur la préforme (11) après le moulage par injection et peut en être enlevé à nouveau, cependant que l'anneau de support (21, 33, 39, 45, 51) présente un support de données qui est au moins le support d'un numéro d'identification.

10. Procédé selon la revendication 9, **caractérisé en ce que**, pendant la fabrication de l'anneau de support (21, 33, 39, 45, 51), le support de données sous forme d'un circuit électronique (55) est inséré dans le moule pour injection et surmoulé par l'anneau de support (21, 33, 39, 45, 51).

11. Procédé selon la revendication 9 ou 10, **caractérisé en ce que** l'anneau de support (21, 33, 39, 45, 51) est fixé à la préforme (11) dans la machine de moulage par injection de préférence pendant le processus de refroidissement, ou après avoir enlevé la préforme de la machine de moulage par injection au cas où l'anneau de support (21, 33, 39, 45, 51) est fabriqué séparément de la préforme (11).

12. Procédé selon l'une des revendications 9 à 11, **caractérisé en ce que** l'anneau de support (21, 33, 39, 45, 51) est enlevé du récipient en matière plastique lorsque l'outil de moulage est fermé ou après démoulage du récipient en matière plastique.

13. Procédé selon la revendication 12, **caractérisé en ce que** l'anneau de support (21, 33, 39, 45, 51) est enlevé du récipient en matière plastique pendant l'étape de transport du récipient en matière plastique de l'outil de moulage à une bande de transport ou pendant l'étape d'emballage du récipient en matière plastique.

14. Procédé selon l'une des revendications 10 à 13, **caractérisé en ce que** des données sont lues sur la mémoire de données pendant le processus de production du récipient en matière plastique et/ou pendant le processus de remplissage du récipient en matière plastique.

15. Procédé selon l'une des revendications 10 à 14, **caractérisé en ce que** des données sont extraites de la mémoire de données pendant le processus de production du récipient en matière plastique et/ou pendant le processus de remplissage du récipient en matière plastique.

16. Procédé selon l'une des revendications 10 à 15, **caractérisé en ce que** des données sont extraites de la mémoire de données pendant l'utilisation du récipient en matière plastique et/ou pendant la revalorisation du récipient en matière plastique.

17. Procédé selon l'une des revendications 9 à 16, **caractérisé en ce que** l'anneau de support (21, 33, 39, 45, 51) est enlevé du récipient en matière plastique pendant la fabrication du récipient en matière plastique ou après le remplissage du récipient en matière plastique.

18. Procédé selon l'une des revendications 9 à 17, **caractérisé en ce que** l'anneau de support (21, 33, 39, 45, 51) est enlevé du récipient en matière plastique avant la mise au rebut ou pendant la revalorisation du récipient en matière plastique.
